# EUROPEAN PATENT APPLICATION

(11) **EP 4 725 719 A1**
(43) Date of publication of application: **15.04.2026**
(21) Application number: 24922316.5
(22) Date of filing: 31.01.2024
(51) Int. Cl.: B60C 29/02, B60C 23/04, F16K 15/20

(54) **TIRE VALVE AND COVER SLEEVE**

(71) Applicant: Pacific Industrial Co., Ltd., Ogaki-shi, Gifu 503-8603 (JP)
(72) Inventor: YAMAMOTO Masahiko, Ogaki-shi, Gifu 503-8603 (JP)
(74) Representative: Kramer Barske Schmidtchen Patentanwälte PartG mbB
(86) International application number: PCT/JP2024/002964
(87) International publication number: WO 2025/163777

(57) **Abstract**

[Problem] Provided is a technique capable of fixing a tire valve to a rim more stably than before.

[Solution] A tire valve of the present disclosure includes: a valve stem configured to house a valve core; a press-fit member made of an elastomer configured to cover an outer side surface of the valve stem and to be press-fitted into a through hole of a rim of a wheel from an inner surface side of the rim and attached so as to pass through the rim from the inner surface side to an outer surface side; a cover sleeve made of a rigid body configured to be fitted over an outer side of the press-fit member from a distal end side of the press-fit member so as to be brought into abutment with an outer surface of the rim; first retaining engagement portions provided in an exposed portion of the valve stem exposed from the press-fit member toward a distal side, and in the cover sleeve, and configured to engage with each other so as to restrict axial movement of the cover sleeve; and second retaining engagement portions provided in the press-fit member and the cover sleeve and configured to engage with each other so as to restrict the axial movement of the cover sleeve.

## Description

### TECHNICAL FIELD

The present disclosure relates to a tire valve attached to a wheel, and a cover sleeve used for the tire valve.

### BACKGROUND ART

As this type of conventional tire valve, a tire valve is known that is press-fitted and attached to a valve mounting hole of a wheel (usually referred to as "snap-in valve") (see, for example, Patent Document 1).

### RELATED ART DOCUMENTS

### PATENT DOCUMENTS

Patent Document 1: JP 2007-153298 A (paragraph [0039], FIG. 8)

### SUMMARY OF THE INVENTION

### PROBLEMS TO BE SOLVED BY THE INVENTION

However, the conventional tire valve described above may tilt due to a centrifugal force during tire rotation. Hence, the present application provides a technique capable of fixing a tire valve to a rim more stably than before.

### SOLUTION TO PROBLEM

A tire valve according to one aspect of the present disclosure made to solve the above problem is a tire valve including: a valve stem configured to house a valve core; a press-fit member made of an elastomer configured to cover an outer side surface of the valve stem and to be press-fitted into a through hole of a rim of a wheel from an inner surface side of the rim and attached so as to pass through the rim from the inner surface side to an outer surface side; a cover sleeve made of a rigid body configured to be fitted over an outer side of the press-fit member from a distal end side of the press-fit member so as to be brought into abutment with an outer surface of the rim; first retaining engagement portions provided in an exposed portion of the valve stem exposed from the press-fit member toward a distal side, and in the cover sleeve, and configured to engage with each other so as to restrict axial movement of the cover sleeve; and second retaining engagement portions provided in the press-fit member and the cover sleeve and configured to engage with each other so as to restrict the axial movement of the cover sleeve.

### BRIEF DESCRIPTION OF THE DRAWINGS

[FIG. 1] FIG. 1 is a cross-sectional side view of a tire valve and a wheel according to a first embodiment.
[FIG. 2] FIG. 2 is a cross-sectional side view of a tire valve body.
[FIG. 3] FIG. 3 is a cross-sectional side view in the halfway stage of attachment of a cover sleeve to the tire valve body.
[FIG. 4] FIG. 4 is an enlarged cross-sectional side view of a proximal end portion of the tire valve.
[FIG. 5] FIG. 5 is a cross-sectional side view of a cover sleeve according to a second embodiment.
[FIG. 6] FIG. 6 is an enlarged cross-sectional side view of a proximal end portion of a tire valve according to a third embodiment.
[FIG. 7] FIG. 7 is an enlarged cross-sectional side view of a proximal end portion of a tire valve according to a fourth embodiment.
[FIG. 8] FIG. 8 is an enlarged cross-sectional side view of a proximal end portion of a tire valve according to a fifth embodiment.
[FIG. 9] FIG. 9 is a cross-sectional side view of a tire valve according to a sixth embodiment.
[FIG. 10] FIG. 10 is an enlarged cross-sectional side view of a distal end portion of a tire valve according to a seventh embodiment.
[FIG. 11] FIG. 11 is a cross-sectional side view of a tire valve according to an eighth embodiment.
[FIG. 12] FIG. 12 is a cross-sectional side view of a tire valve according to a ninth embodiment.

### MODE FOR CARRYING OUT THE INVENTION

### [First embodiment]

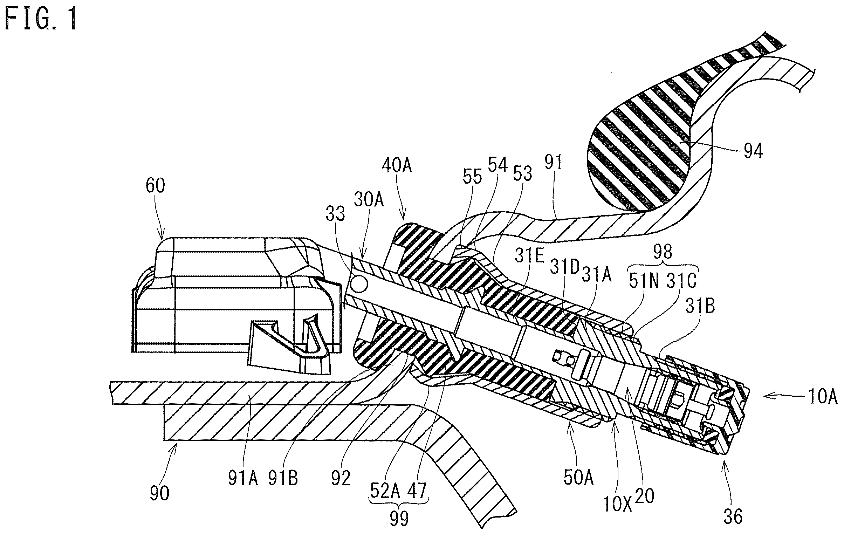

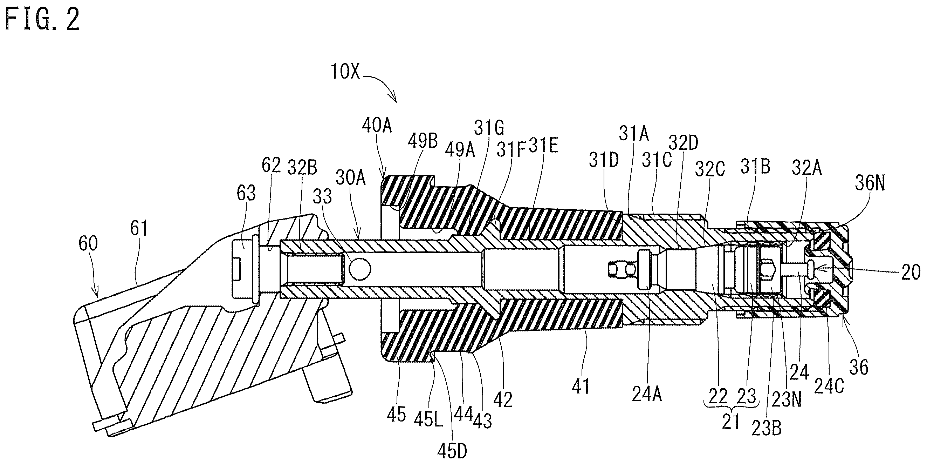

A tire valve 10A according to a first embodiment will be described with reference to FIGS. 1 to 4. As illustrated in FIG. 1, the tire valve 10A of the present embodiment is formed by attaching a cover sleeve 50A, a state monitoring device 60, a cap 36, and the like to a tire valve body 10X. The tire valve 10A is a so-called snap-in valve, and the tire valve body 10X is press-fitted and attached to a valve mounting hole 92 of a rim 91 of a wheel 90 in a state where the cover sleeve 50A is removed (see FIG. 2). The cover sleeve 50A is mounted on a portion of the tire valve body 10X located outside the rim 91.

First, the tire valve body 10X will be described. Here, an end portion on the right side of the tire valve body 10X in FIGS. 1 and 2 is a "distal end portion", and the opposite side is a "proximal end portion". Hereinafter, also in each component of the tire valve 10A, the right side in FIGS. 1 and 2 is referred to as "distal end side", and the opposite side is referred to as "proximal end side" similarly to the tire valve body 10X.

The tire valve body 10X includes a valve core 20, a valve stem 30A that houses the valve core 20, and a press-fit member 40A that covers an intermediate portion of the valve stem 30A in the longitudinal direction.

The valve stem 30A is, for example, a pipe made of metal, and as illustrated in FIG. 2, includes a step surface 31D at an intermediate position in the longitudinal direction of its outer side surface. The distal end side from the step surface 31D is a large-diameter portion 31A, while the proximal end side is a small-diameter portion 31E. The large-diameter portion 31A includes a first male threaded portion 31B and a second male threaded portion 31C in this order from the distal end side, and a female threaded portion 36N of the cap 36 is threadedly engaged with the first male threaded portion 31B. A minor diameter of the second male threaded portion 31C is larger than an outer diameter of the cap 36. With this configuration, the cover sleeve 50A can be mounted on the tire valve body 10X in a state where the cap 36 is engaged with the first male threaded portion 31B.

A flange 31F protrudes from an intermediate position in the axial direction of the small-diameter portion 31E. The flange 31F has a triangular cross section, and has a flat surface facing the distal end side of the valve stem 30A and a tapered surface facing the proximal end side. An intermediate large-diameter portion 31G having an outer diameter slightly larger than the entire small-diameter portion 31E is provided adjacent to the proximal end side of the flange 31F in the small-diameter portion 31E.

Female threaded portions 32A and 32B are provided on an inner side of the valve stem 30A at a distal end portion and a proximal end portion. On the inner side of the large-diameter portion 31A of the valve stem 30A, a tapered portion 32C and a minimum inner diameter portion 32D are provided on the proximal end side with respect to the female threaded portion 32A, and the tapered portion gradually decreases in diameter toward the minimum inner diameter portion 32D. A vent hole 33 that passes through the valve stem 30A in a direction perpendicular to the axial direction is provided at a position near the proximal end of the valve stem 30A before the female threaded portion 32B.

The valve stem 30A of the present embodiment is made of metal, but may be made of any material other than metal, such as resin as long as it is rigid.

The valve core 20 is, for example, a general-purpose component commonly used in various tire valves, and has the following structure. That is, the valve core 20 includes a support cylindrical portion 21, a movable shaft 24 passing through the support cylindrical portion 21, and a compression coil spring (not illustrated). The support cylindrical portion 21 has a structure in which a cylindrical head portion 23 is rotatably connected to one end portion of a cylindrical base portion 22. A bridge portion 23B that straddles an opening of the cylindrical head portion 23 is provided on an end surface of the cylindrical head portion 23 that is disposed opposite to the cylindrical base portion 22, and a through hole (not illustrated) is formed in the bridge portion 23B coaxially with the central axis of the cylindrical head portion 23. A threaded portion 23N is formed on an outer side surface of the cylindrical head portion 23. An outer diameter of the cylindrical base portion 22 is gradually reduced with increasing distance from the cylindrical head portion 23.

The movable shaft 24 passes through the support cylindrical portion 21, and its both end portions protrude from the support cylindrical portion 21. A flange portion having a thin plate structure is provided at one end portion of the movable shaft 24 protruding from the cylindrical base portion 22, and a seal member (not illustrated) is received inside the flange portion to form a valve body 24A. A spring presser flange 24C is provided at the other end portion of the movable shaft 24. The compression coil spring (not illustrated) placed onto the movable shaft 24 is sandwiched between the bridge portion 23B and the spring presser flange 24C, and the valve body 24A is pressed against an end surface opening of the support cylindrical portion 21 by a resilient force of the compression coil spring.

The valve core 20 is inserted from the distal end side of the valve stem 30A, and is attached in a state where an outer side surface of the cylindrical base portion 22 and an inner side surface of the valve stem 30A are in close contact with each other (so-called metal seal state) by threaded engagement between the threaded portion 23N of the cylindrical head portion 23 and the female threaded portion 32A of the valve stem 30A. The valve core 20 allows passage of a fluid from the distal end side to the proximal end side of the valve stem 30A, and prohibits passage of a fluid in the opposite direction.

The press-fit member 40A has a cylindrical shape that covers, from the lateral side, the small-diameter portion 31E from a distal end to a position before the vent hole 33. The press-fit member 40A is made of vulcanized rubber and formed by molding on the outer side of the valve stem 30A. A distal end surface of the press-fit member 40A is bonded to the step surface 31D of the valve stem 30A by vulcanization, and an inner surface of the press-fit member 40A is bonded to the outer side surface of the valve stem 30A by vulcanization in a range from the distal end of the small-diameter portion 31E to an intermediate position of the intermediate large-diameter portion 31G. The inner surface of the press-fit member 40A in a range from the intermediate position of the intermediate large-diameter portion 31G to a position near a proximal end forms a medium-diameter hole portion 49A that is slightly larger than the intermediate large-diameter portion 31G, and the proximal end side from the medium-diameter hole portion 49A forms a large-diameter hole portion 49B that is enlarged in diameter in a stepped manner from the medium-diameter hole portion 49A.

An outer side surface of the press-fit member 40A includes a small-diameter portion 41, a tapered guide portion 42, a triangular ridge 43, a fitting portion 44, and a proximal end large-diameter portion 45 in this order from the distal end side. The small-diameter portion 41 has an outer diameter slightly larger than that of a proximal end portion of the large-diameter portion 31A of the valve stem 30A and extends to a position before the flange 31F. The fitting portion 44 has a larger outer diameter than the outer diameter of the small-diameter portion 41, and the proximal end large-diameter portion 45 further has a larger outer diameter than the outer diameter of the fitting portion 44. Furthermore, the tapered guide portion 42 is gradually enlarged in diameter from a proximal end of the small-diameter portion 41 toward a distal end portion of the fitting portion 44. A proximal end of the tapered guide portion 42 is slightly larger than the fitting portion 44 and is then slightly reduced in diameter in a tapered shape toward the fitting portion 44 to form the triangular ridge 43 that slightly protrudes from the distal end of the fitting portion 44. A step surface 45D between the fitting portion 44 and the proximal end large-diameter portion 45 is recessed in an annular groove shape to form a thin lip 45L at an outer edge portion.

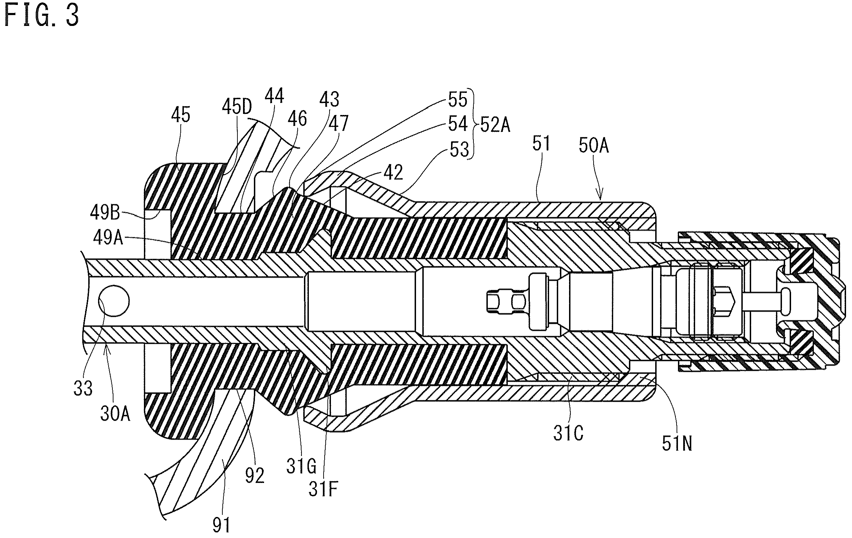

The tire valve body 10X is press-fitted into the valve mounting hole 92 of the wheel 90 as follows. That is, as illustrated in FIG. 1, the valve mounting hole 92 passes through, for example, a tapered portion 91B protruding obliquely laterally from an outer edge portion of a cylindrical portion 91A that is parallel to the central axis of the rim 91 of the wheel 90. The distal end side of the tire valve body 10X is inserted into the valve mounting hole 92 on the inner surface side of the rim 91. Then, the tapered guide portion 42 of the press-fit member 40A abuts on an opening edge of the valve mounting hole 92. When the tire valve body 10X is further pushed into the valve mounting hole 92, the press-fit member 40A is deformed to be reduced in diameter, and the step surface 45D of the proximal end large-diameter portion 45 abuts on the inner surface of the rim 91 as illustrated in FIG. 3, so that the tire valve body 10X is positioned with respect to the wheel 90. In this state, a portion of the fitting portion 44 of the press-fit member 40A disposed outside the rim 91 forms a rim-facing surface 46 that is tapered continuously from the triangular ridge 43 and faces an outer surface of the rim 91. An outer large-diameter portion 47 including the rim-facing surface 46 and the tapered guide portion 42 with their backs to each other is formed. The medium-diameter hole portion 49A comes into close contact with the valve stem 30A inside the press-fit member 40A. The state monitoring device 60 and the cover sleeve 50A, which will be described below, are attached to the tire valve body 10X that has been press-fitted into the wheel 90 in this manner. An inner edge portion of a tire 94 engages with an outer edge portion of the tapered portion 91B of the rim 91 disposed away from the cylindrical portion 91A.

The valve stem 30A of the present embodiment is made of vulcanized rubber, but may be made of any material other than vulcanized rubber, such as soft resin, as long as it is an elastomer.

The state monitoring device 60 has a structure in which a circuit board (not illustrated) on which a pressure sensor, a temperature sensor, and a wireless circuit are mounted and a battery are packaged in a housing 61 illustrated in FIG. 2. An attachment hole 62 passes through the housing 61, and one end side of the attachment hole 62 is reduced in diameter in a stepped manner. The valve stem 30A is inserted into the large diameter side of the attachment hole 62, an end surface of the valve stem 30A is brought into abutment with a step surface of the attachment hole 62, and a bolt 63 inserted into the attachment hole 62 from the small diameter side is fastened to the female threaded portion 32B of the valve stem 30A, whereby the state monitoring device 60 is fixed to the proximal end portion of the valve stem 30A.

The state monitoring device 60 and the cap 36 may be attached to the tire valve body 10X before the tire valve body 10X is attached to the wheel 90. The fixation of the state monitoring device 60 to the valve stem 30A is not limited to the above structure. For example, a male threaded portion may be formed on an outer surface of the proximal end portion of the valve stem 30A, and a female threaded portion to be threadedly engaged with the male threaded portion may be provided on the state monitoring device 60. Furthermore, although the tire valve 10A of the present embodiment includes the state monitoring device 60, the tire valve 10A does not have to include the state monitoring device 60.

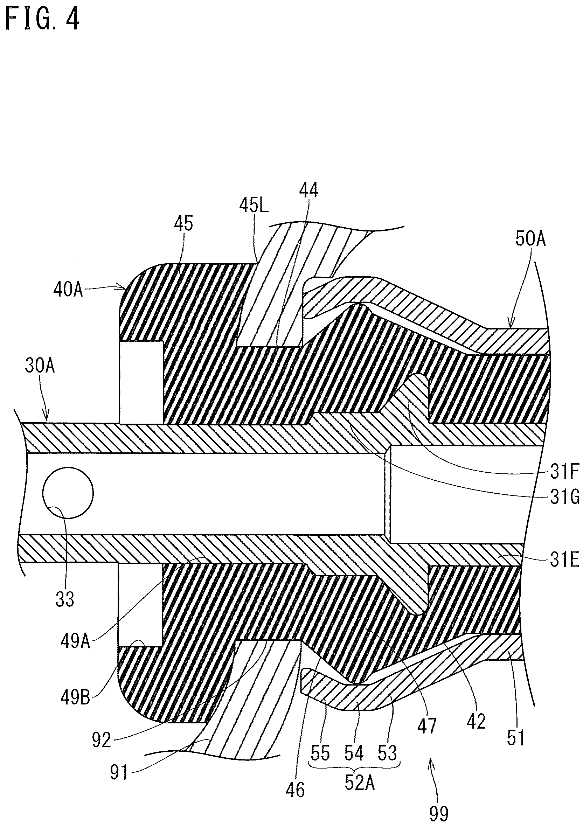

The cover sleeve 50A is made of metal, for example, and includes a large-diameter receiving portion 52A on the proximal end side of a small cylindrical portion 51 as illustrated in FIG. 3. The large-diameter receiving portion 52A includes a large cylindrical portion 54 having a larger diameter than that of the small cylindrical portion 51, an enlarged diameter portion 53 connecting the large cylindrical portion 54 and the small cylindrical portion 51, and a reduced diameter portion 55 reduced in diameter from the large cylindrical portion 54 toward the proximal end side. The reduced diameter portion 55 has a shorter axial length than that of the large cylindrical portion 54, and the proximal end side of the reduced diameter portion 55 has a larger opening diameter than an opening diameter of the proximal end side of the small cylindrical portion 51. A distal end portion of the small cylindrical portion 51 has a smaller inner diameter than an inner diameter of the entire small cylindrical portion 51, and a female threaded portion 51N is formed thereon. As illustrated in FIG. 4, a proximal end surface of the cover sleeve 50A is a flat surface substantially perpendicular to the central axis of the cover sleeve 50A, and an inner opening edge of a proximal end opening of the cover sleeve 50A is rounded.

The cover sleeve 50A is attached to the tire valve body 10X as follows. The cover sleeve 50A is fitted over the tire valve body 10X with the proximal end-side opening of the cover sleeve 50A facing the distal end of the tire valve body 10X that has been press-fitted into the rim 91 of the wheel 90. Then, as illustrated in FIG. 3, the female threaded portion 51N of the cover sleeve 50A abuts on the second male threaded portion 31C of the valve stem 30A when the proximal end of the cover sleeve 50A abuts on the tapered guide portion 42 of the press-fit member 40A. Here, the proximal end portion of the cover sleeve 50A passes through an outermost diameter portion of the outer large-diameter portion 47 by rotating the cover sleeve 50A to further threadedly engage the female threaded portion 51N with the second male threaded portion 31C. When the female threaded portion 51N and the second male threaded portion 31C are still further threadedly engaged, the large-diameter receiving portion 52A engages with the outer large-diameter portion 47, and the proximal end surface of the cover sleeve 50A is brought into abutment with the outer surface of the rim 91 as illustrated in FIG. 4. Specifically, the outermost diameter portion of the outer large-diameter portion 47 is in close contact with the large cylindrical portion 54 of the large-diameter receiving portion 52A, the reduced diameter portion 55 faces the rim-facing surface 46 of the outer large-diameter portion 47, and the proximal end surface of the cover sleeve 50A faces the outer surface of the rim 91. As a result, the mounting of the cover sleeve 50A on the tire valve body 10X is completed, and the attachment of the tire valve 10A to the wheel 90 is completed.

The cover sleeve 50A of the present embodiment is made of metal, but may be made of non-metal material, such as resin or ceramics, as long as it is rigid.

The structure of the tire valve 10A of the present embodiment has been described above. Next, the operational effects of the tire valve 10A will be described. As described above, in the tire valve 10A of the present embodiment, after the press-fit member 40A covering the valve stem 30A has been press-fitted into the valve mounting hole 92 of the wheel 90, the cover sleeve 50A is fitted over the press-fit member 40A to be brought into abutment with the outer surface of the rim 91 outside the rim 91. As a result, even if a centrifugal force generated by rotation of the wheel 90 acts to tilt the tire valve 10A, the cover sleeve 50A abuts on the rim 91, and thereby to restrict tilting of the tire valve 10A with respect to the rim 91. Here, the cover sleeve 50A is prevented from coming off by first retaining engagement portions 98 provided in the cover sleeve 50A and the valve stem 30A and by second retaining engagement portions 99 provided in the cover sleeve 50A and the press-fit member 40A. Since the first retaining engagement portions 98 provide an engagement between rigid bodies, a high engagement force can be obtained, and since the second retaining engagement portions 99 provide an engagement between a rigid body and an elastic body, rattling can be prevented. The first retaining engagement portions 98 and the second retaining engagement portions 99 cooperate to suppress rattling due to vibration, and enable restriction of axial movement of the cover sleeve 50A with a high engagement force. As a result, the cover sleeve 50A is stably fixed, the tilting of the tire valve 10A is suppressed, and the tire valve 10A is stably fixed to the rim 91.

More specifically, as illustrated in FIG. 4, the second retaining engagement portions 99 restrict the axial movement of the cover sleeve 50A by two types of engagement :frictional engagement between the large cylindrical portion 54 of the large-diameter receiving portion 52A and a vertex portion of the outer large-diameter portion 47, and engagement by opposed arrangement between the reduced diameter portion 55 of the large-diameter receiving portion 52A and the rim-facing surface 46 of the outer large-diameter portion 47. The frictional engagement restricts rotation of the cover sleeve 50A, thereby to restrict loosening of the threaded engagement between the second male threaded portion 31C and the female threaded portion 51N as the first retaining engagement portions 98. Even if the threaded engagement is loosened by a certain amount, further loosening of the threaded engagement between the second male threaded portion 31C and the female threaded portion 51N is restricted by the opposed arrangement between the reduced diameter portion 55 and the rim-facing surface 46. As a result, even if the centrifugal force for tilting the tire valve 10A is repeatedly generated by the rotation of the wheel 90, loosening of the engagement of the cover sleeve 50A with the tire valve body 10X is prevented, and thus stable restriction of the tilt movement becomes possible by the cover sleeve 50A. The second retaining engagement portions 99 of the present embodiment include the two types of engagement, namely the frictional engagement and the engagement by opposed arrangement, but may include only one of them.

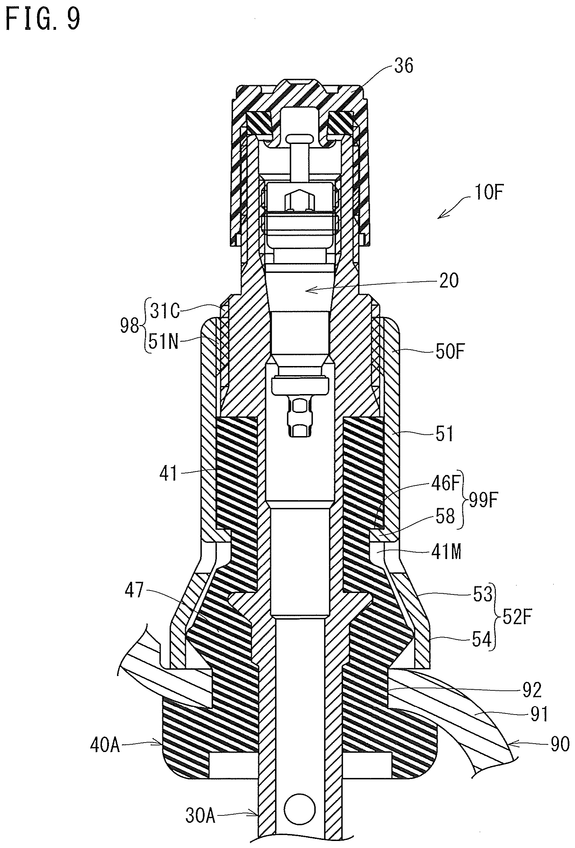

In addition, as in a tire valve 10F (see FIG. 9) of a sixth embodiment to be described later, engagement pieces 58 that are bent into a cover sleeve 50F may be provided as a second retaining engagement portion 99F of the cover sleeve 50F. However, when the structure is adopted in which the outer large-diameter portion 47 of the press-fit member 40A and the large-diameter receiving portion 52A of the cover sleeve 50A that receives the outer large-diameter portion 47 engage with each other as in the present embodiment, the second retaining engagement portions 99 engage in the entire circumferential direction of the cover sleeve 50A and the press-fit member 40A, so that the engagement is stabilized. In addition, since the tapered guide portion 42 is provided in the outer large-diameter portion 47 on an opposite side to the rim-facing surface 46, the reduced diameter portion 55 of the cover sleeve 50A smoothly climbs over the outermost portion of the outer large-diameter portion 47 of the press-fit member 40A, and the cover sleeve 50A can be easily attached.

In addition, since the reduced diameter portion 55 of the cover sleeve 50A has a tapered shape that narrows toward the rim 91, the cover sleeve 50A and the outer surface of the rim 91 contact within a narrow space, and therefore the tire valve 10A can be attached also to the wheel 90 having a protrusion near the valve mounting hole 92. That is, according to the tire valve 10A of the present embodiment, the number of types of the wheel 90 to which the tire valve 10A can be attached increases.

### [Second embodiment]

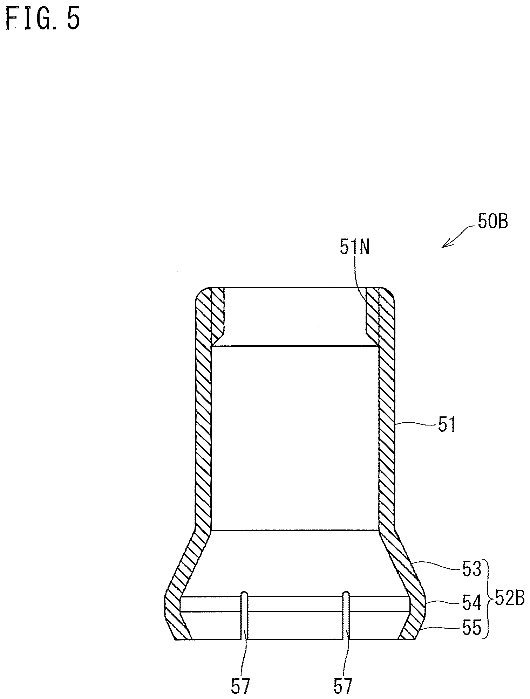

A cover sleeve 50B of the present embodiment illustrated in FIG. 5 has a structure in which the cover sleeve 50A of the first embodiment includes a plurality of slits 57. Specifically, the plurality of (for example, 4 to 8) slits 57 are evenly disposed in the circumferential direction of a large-diameter receiving portion 52B, and extend from a proximal end of the enlarged diameter portion 53 to a proximal end of the reduced diameter portion 55. With the configuration of the present embodiment, a proximal end portion of the large-diameter receiving portion 52B is divided into a plurality of protruding pieces by the plurality of slits 57, a proximal end portion of the cover sleeve 50B is easily deformed to be enlarged and reduced, and the cover sleeve 50B is easily attached to the tire valve body 10X.

### [Third embodiment]

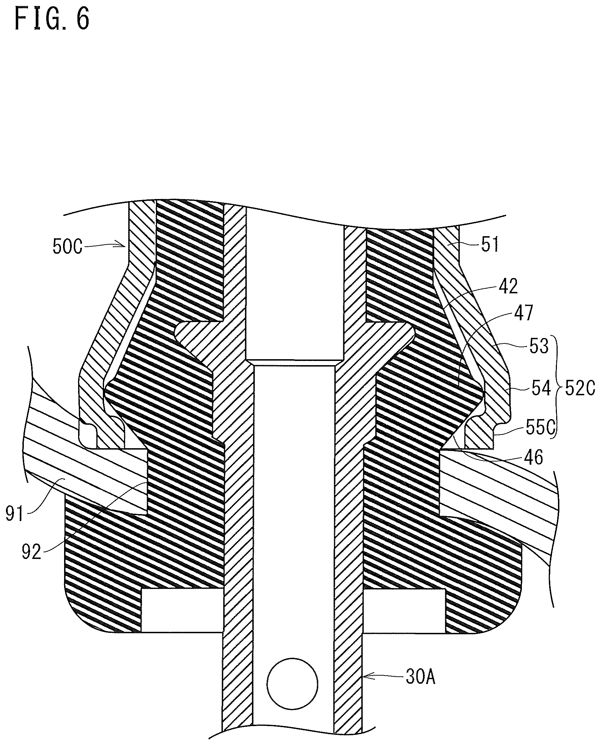

A cover sleeve 50C of the present embodiment illustrated in FIG. 6 is different from the first embodiment only in that a reduced diameter portion 55C of a large-diameter receiving portion 52C is reduced in diameter in a stepped manner from the large cylindrical portion 54.

### [Fourth embodiment]

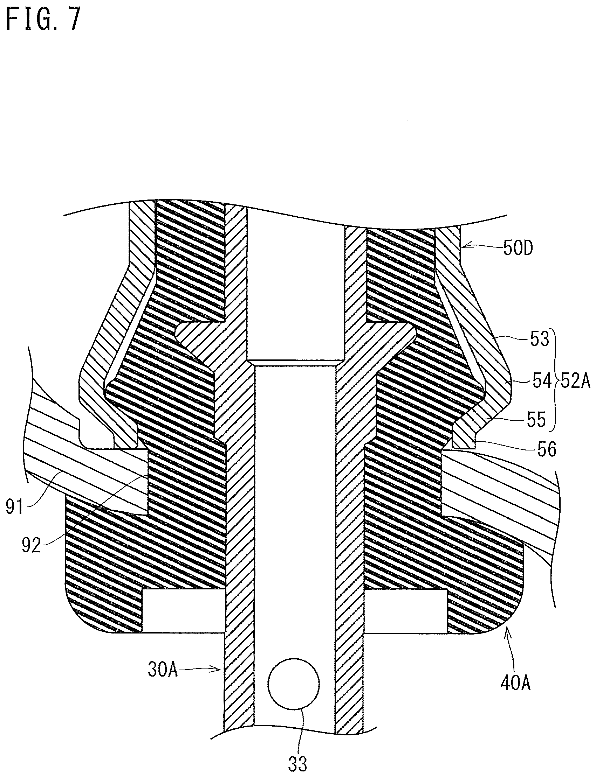

A cover sleeve 50D of the present embodiment illustrated in FIG. 7 has a structure in which an extended cylindrical portion 56 is extended from a proximal end of the reduced diameter portion 55 of the cover sleeve 50A of the first embodiment.

### [Fifth embodiment]

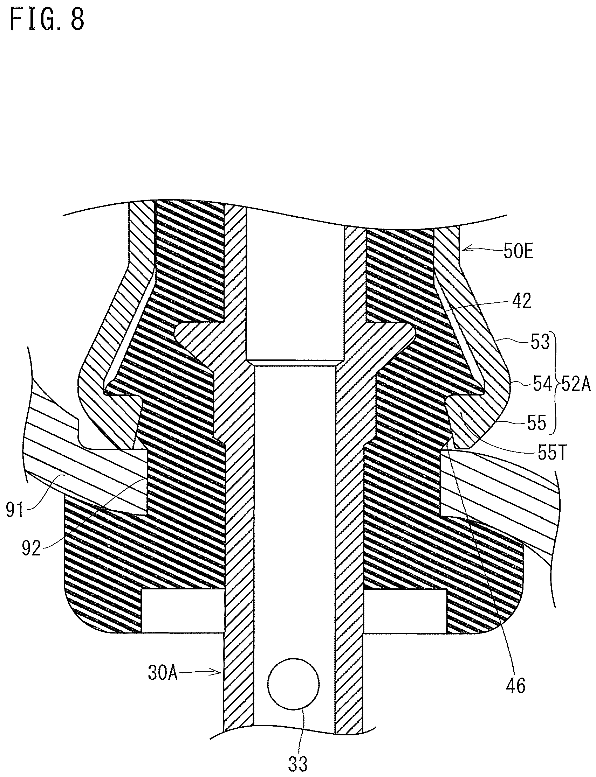

In a cover sleeve 50E of the present embodiment illustrated in FIG. 8, an annular ridge 55T having a triangular cross section is provided on an inner surface of the reduced diameter portion 55 of the cover sleeve 50A of the first embodiment, and the annular ridge 55T bites into the rim-facing surface 46 of the press-fit member 40A.

### [Sixth embodiment]

A cover sleeve 50F of a tire valve 10F of the present embodiment illustrated in FIG. 9 has a structure in which a large-diameter receiving portion 52F is not provided with the reduced diameter portion 55, and the large cylindrical portion 54 is extended to a position capable of abutting on the outer surface of the rim 91. In the cover sleeve 50F, a plurality of engagement pieces 58 are formed by cutting a proximal end portion of the small cylindrical portion 51 at a plurality of locations in a protruding piece shape and perpendicularly bending the pieces inward. An annular groove 41M is formed in the small-diameter portion 41 of the press-fit member 40A, and the plurality of engagement pieces 58 face and engage with a rim-facing surface 46F that is a groove side surface of the annular groove 41M and that faces the rim 91. The plurality of engagement pieces 58 and the rim-facing surface 46F serve as second retaining engagement portions 99F.

### [Seventh embodiment]

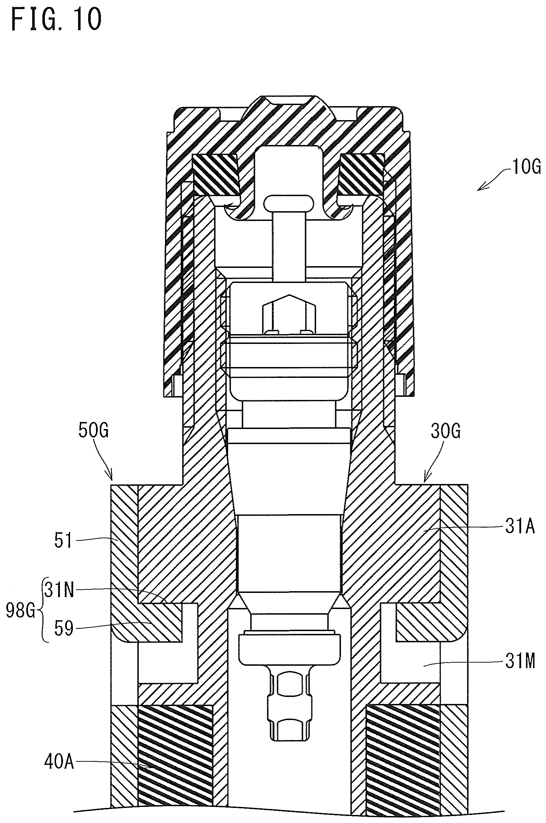

A tire valve 10G of the present embodiment illustrated in FIG. 10 is different from the first embodiment in the structure of first retaining engagement portions 98G. That is, in the large-diameter portion 31A on the distal end side of a valve stem 30G, a proximal end portion from the first male threaded portion 31B is enlarged in diameter in a stepped manner, and an annular groove 31M is formed therein. In a cover sleeve 50G, a plurality of engagement pieces 59 are formed by cutting a distal end portion of the small cylindrical portion 51 at a plurality of locations in a protruding piece shape and perpendicularly bending the pieces inward. The plurality of engagement pieces 59 face and engage with a groove side surface 31N of the annular groove 31M that faces the rim 91. That is, the groove side surface 31N and the engagement pieces 59 serve as the first retaining engagement portions 98G. Although not illustrated, for example, an E ring may be attached to the annular groove 31M, and a distal end surface of the cover sleeve 50G may abut on the E ring.

### [Eighth embodiment]

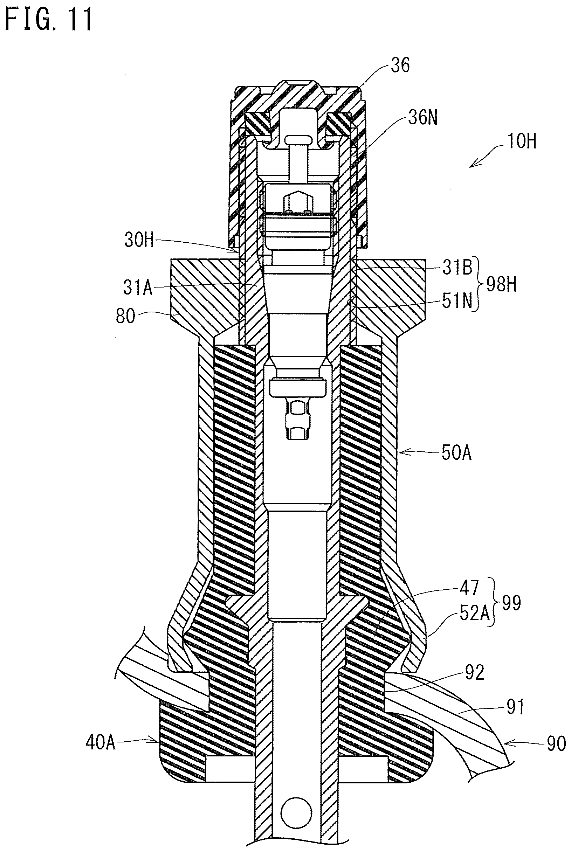

In the tire valve 10A of the first embodiment, in the large-diameter portion 31A on the distal end side of the valve stem 30A, the first male threaded portion 31B with which the cap 36 is threadedly engaged and the second male threaded portion 31C with which the cover sleeve 50A is threadedly engaged are separately provided with different diameters as illustrated in FIG. 1. However, in a valve stem 30H of a tire valve 10H of the present embodiment illustrated in FIG. 11, the first male threaded portion 31B is formed over the entire large-diameter portion 31A, the female threaded portion 51N of the cover sleeve 50A is threadedly engaged to a proximal end portion of the large-diameter portion 31A, and the female threaded portion 36N of the cap 36 is threadedly engaged to a distal end portion of the large-diameter portion 31A. A distal end portion of the cover sleeve 50A of the present embodiment is provided with a tool engagement portion 80 having a hexagonal plane shape. In the present embodiment, the female threaded portion 51N of the cover sleeve 50A and the first male threaded portion 31B of the valve stem 30H form first retaining engagement portions 98H.

### [Ninth embodiment]

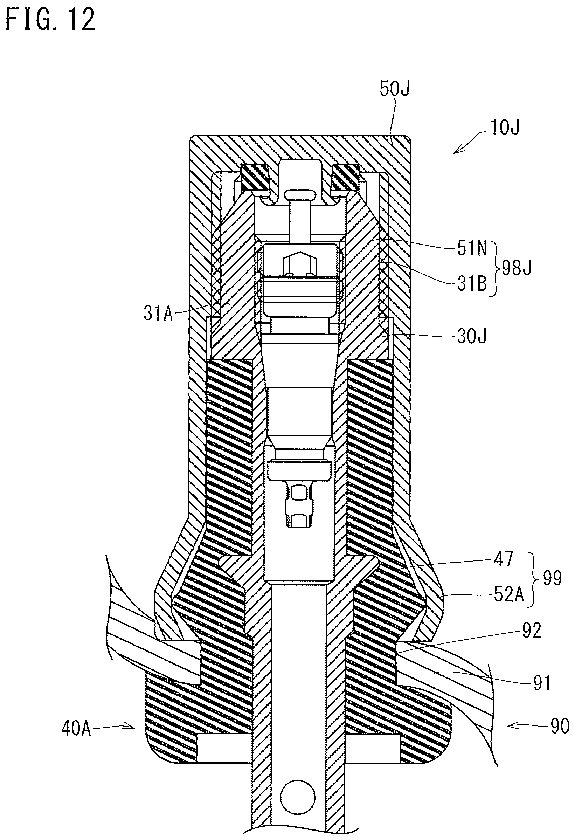

In a tire valve 10J of the present embodiment illustrated in FIG. 12, a cover sleeve 50J in which the cap 36 and the cover sleeve 50A of the eighth embodiment are integrated is provided, and a distal end portion of a valve stem 30J is closed. In the present embodiment, the female threaded portion 51N of the cover sleeve 50J and the first male threaded portion 31B of the valve stem 30J form first retaining engagement portions 98J.

### <Note>

Hereinafter, a feature group extracted from the above embodiments will be described while showing the effects and the like as necessary. In the following, for easy understanding, corresponding configurations in the above embodiments will be appropriately indicated in parentheses or the like, but this feature group is not limited to the specific configurations indicated in the parentheses or the like.

### [Feature 1]

A tire valve (10A) including: a valve stem (30A) made of a rigid body configured to house a valve core (20); a press-fit member (40A) made of an elastomer configured to cover an outer side surface of the valve stem (30A) and to be press-fitted into a valve mounting hole (92) of a rim (91) of a wheel (90) from an inner surface side of the rim (91) and attached so as to pass through the rim (91) from the inner surface side to an outer surface side; a cover sleeve (50A) made of a rigid body configured to be fitted over an outer side of the press-fit member (40A) from a distal end side of the press-fit member (40A) so as to be brought into abutment with an outer surface of the rim (91); first retaining engagement portions (98) provided in an exposed portion of the valve stem (30A) exposed from the press-fit member (40A) toward a distal side, and in the cover sleeve (50A), and configured to engage with each other so as to restrict axial movement of the cover sleeve (50A); and second retaining engagement portions (99) provided in the press-fit member (40A) and the cover sleeve (50A) and configured to engage with each other so as to restrict the axial movement of the cover sleeve (50A).

### [Feature 2]

The tire valve (10A) according to the feature 1, wherein the press-fit member (40A) is provided with a rim-facing surface (46) disposed outside the rim (91) and facing the rim (91) as the second retaining engagement portion (99), and the second retaining engagement portion (99) of the cover sleeve (50A) is disposed to face the rim-facing surface (46) of the press-fit member (40A).

### [Feature 3]

The tire valve (10A) according to the feature 1 or 2, wherein the press-fit member (40A) includes an outer large-diameter portion (47) having an outer diameter larger than the valve mounting hole (92) in a state where the press-fit member is attached to the valve mounting hole (92), and including a rim-facing surface (46) facing the outer surface of the rim (91), the cover sleeve (50A) is provided with a large-diameter receiving portion (52A) configured to receive the outer large-diameter portion (47) and at least partially forming a reduced diameter portion (55) facing the rim-facing surface (46), and opposing portions of the rim-facing surface (46) and the reduced diameter portion (55) serve as the second retaining engagement portions (99).

### [Feature 4]

The tire valve (10A) according to the feature 3, wherein the outer large-diameter portion (47) includes a tapered guide portion (42) reduced in diameter with increasing distance from the rim (91) on a side opposite to the rim-facing surface (46).

### [Feature 5]

The tire valve (10A) according to the feature 3 or 4, wherein the reduced diameter portion (55) has a tapered shape that narrows toward the rim (91).

### [Feature 6]

The tire valve (10A) according to the feature 5, wherein an end portion of the reduced diameter portion (55) is in abutment with the outer surface of the rim (91).

### [Feature 7]

The tire valve (10A) according to any one of the features 3 to 5, including an extended cylindrical portion (56) extended from the reduced diameter portion (55) to be in abutment with the outer surface of the rim (91).

### [Feature 8]

The tire valve (10A) according to any one of the features 1 to 7, wherein the first retaining engagement portion (98) of the cover sleeve (50A) is a female threaded portion (51N) formed on an inner surface of the cover sleeve (50A), and the first retaining engagement portion (98) of the valve stem (30A) is a male threaded portion (31C) to be threadedly engaged with the female threaded portion (51N).

### [Feature 9]

The tire valve (10H) according to the feature 8, including a cap (36) configured to close a distal end portion of the valve stem (30H) and including a female threaded portion (36N) on an inner surface, wherein the male threaded portion (31B) of the valve stem (30H) is configured to be threadedly engageable with the female threaded portion (51N) of the cover sleeve (50A) and the female threaded portion of the cap (36).

### [Feature 10]

The tire valve (10J) according to the feature 8, wherein the cover sleeve (50J) is closed at one end to close a distal end portion of the valve stem (30J).

### [Feature 11]

The tire valve (10H) according to any one of the features 8 to 10, wherein the cover sleeve (50A) includes a tool engagement portion (80) having a hexagonal shape as viewed in an axial direction.

### [Feature 12]

The tire valve (10A) according to any one of the features 1 to 11, including: a proximal end-side exposed portion provided in the valve stem (30A) and protruding from a proximal end surface of the press-fit member (40A); and a state monitoring device (60) attached to the proximal end-side exposed portion to monitor a state in a tire (94).

### [Feature 13]

A cover sleeve (50A) used for the tire valve (10A) according to any one of the features 1 to 12.

In the tire valve of the feature 1, after the press-fit member covering the valve stem has been press-fitted into the valve mounting hole of the wheel, the cover sleeve is fitted over the press-fit member to be brought into abutment with the outer surface of the rim outside the rim. As a result, even if a centrifugal force generated by rotation of the wheel acts to tilt the tire valve, the cover sleeve abuts on the rim, thereby to restrict tilting of the tire valve with respect to the rim. Here, the cover sleeve is prevented from coming off by the first retaining engagement portions provided in the cover sleeve and the valve stem and the second retaining engagement portions provided in the cover sleeve and the press-fit member. Since the first retaining engagement portions engage between rigid bodies, a high engagement force can be obtained, and since the second retaining engagement portions engage between a rigid body and an elastic body, rattling can be prevented. The first retaining engagement portions and the second retaining engagement portions cooperate to suppress rattling due to vibration, and enable restriction of axial movement of the cover sleeve with a high engagement force. As a result, the cover sleeve is stably fixed, the tilting of the tire valve is suppressed, and the tire valve is stably fixed to the rim.

The second retaining engagement portions may be configured such that the second retaining engagement portions of the cover sleeve and the press-fit member frictionally engage with each other, may be configured such that the press-fit member is provided with the rim-facing surface facing the outer surface side of the rim as the second retaining engagement portion, and the second retaining engagement portion of the cover sleeve is disposed to face the rim-facing surface as in the feature 2, or may be configured to include both of the configurations.

The second retaining engagement portion of the cover sleeve may be a protruding piece bent into the cover sleeve, or as in the feature 3, the press-fit member may be provided with the outer large-diameter portion having an outer diameter larger than the valve mounting hole, the cover sleeve may be provided with the large-diameter receiving portion having a size to receive the outer large-diameter portion of the press-fit member, and the rim-facing surface provided in the outer large-diameter portion of the press-fit member and the reduced diameter portion provided in the large-diameter receiving portion of the cover sleeve may serve as the second retaining engagement portions to face each other. With the configuration of the feature 3, since the second retaining engagement portions engage with each other in the entire circumferential direction of the cover sleeve and the press-fit member, the engagement between the second retaining engagement portions is stabilized.

In the tire valve of the feature 4, since the tapered guide portion reduced in diameter with increasing distance from the rim is provided in the outer large-diameter portion of the press-fit member on an opposite side to the rim-facing surface, the reduced diameter portion of the cover sleeve smoothly climbs over an outermost portion of the outer large-diameter portion of the press-fit member, and the cover sleeve can be easily attached.

The reduced diameter portion may have a flat disk shape, or a tapered shape that narrows toward the rim as in the feature 5. With the configuration of the feature 5, the cover sleeve and the outer surface of the rim contact within a narrow space, and the tire valve can be attached also to the wheel having a protrusion near the valve mounting hole. That is, according to the tire valve of the feature 5, the number of types of the wheel to which the tire valve can be attached increases.

As in the feature 6, the end portion of the reduced diameter portion having a tapered shape may be in abutment with the outer surface of the rim, or as in the feature 7, the extended cylindrical portion extended from the reduced diameter portion may be in abutment with the outer surface of the rim.

The first retaining engagement portions may be an E ring fixed to the valve stem and a distal end surface of the cover sleeve abutting on the E ring, or may be the male threaded portion and the female threaded portion formed on the valve stem and the cover sleeve as in the feature 8. In addition, as in the feature 9, the male threaded portion of the valve stem may be used for threaded engagement with both of the female threaded portion of the cover sleeve and the female threaded portion of the cap. Furthermore, the cover sleeve and the cap may be separately provided as in the feature 9, or the cover sleeve and the cap may be integrated as in the feature 10. When the hexagonal tool engagement portion is provided in the cover sleeve as in the feature 11, the cover sleeve can be easily attached.

In a case where the state monitoring device for monitoring the state in the tire is attached to the proximal end-side exposed portion of the valve stem as in the tire valve of the feature 12, the centrifugal force becomes large, so that the above-described effects of the tilt restriction by the cover sleeve become greater than those of a case where the state monitoring device is not attached.

Although specific examples of the technique included in the claims are disclosed in the present specification and the drawings, the technique described in the claims is not limited to these specific examples, and includes those obtained by variously modifying or changing the specific examples, and also includes those obtained by singly extracting part from the specific examples.

### DESCRIPTION OF THE REFERENCE NUMERALS

10A, 10F, 10G, 10H, 10J Tire valve
20 Valve core
30A, 30G, 30H, 30J Valve stem
31B First male threaded portion (first retaining engagement portion)
31C Second male threaded portion (first retaining engagement portion)
31N Groove side surface (first retaining engagement portion)
40A Press-fit member
42 Tapered guide portion
46, 46F Rim-facing surface
47 Outer large-diameter portion
50A to 50G, 50J Cover sleeve
51N Female threaded portion (first retaining engagement portion)
52A to 52C, 52F Large-diameter receiving portion
54 Large cylindrical portion
55, 55C Reduced diameter portion
55T Annular ridge
56 Extended cylindrical portion
58 Engagement piece (second retaining engagement portion)
59 Engagement piece (first retaining engagement portion)
60 State monitoring device
80 Tool engagement portion
90 Wheel
91 Rim
92 Valve mounting hole
98, 98G, 98H, 98J First retaining engagement portion
99, 99F Second retaining engagement portion

## Claims

1. A tire valve comprising:
a valve stem made of a rigid body configured to house a valve core;
a press-fit member made of an elastomer configured to cover an outer side surface of the valve stem and to be press-fitted into a valve mounting hole of a rim of a wheel from an inner surface side of the rim and attached so as to pass through the rim from the inner surface side to an outer surface side;
a cover sleeve made of a rigid body configured to be fitted over an outer side of the press-fit member from a distal end side of the press-fit member so as to be brought into abutment with an outer surface of the rim;
first retaining engagement portions provided in an exposed portion of the valve stem exposed from the press-fit member toward a distal side, and in the cover sleeve, and configured to engage with each other so as to restrict axial movement of the cover sleeve; and
second retaining engagement portions provided in the press-fit member and the cover sleeve and configured to engage with each other so as to restrict the axial movement of the cover sleeve.

2. The tire valve according to claim 1, wherein
the press-fit member is provided with a rim-facing surface disposed outside the rim and facing the rim as the second retaining engagement portion, and
the second retaining engagement portion of the cover sleeve is disposed to face the rim-facing surface of the press-fit member.

3. The tire valve according to claim 1 or 2, wherein
the press-fit member includes an outer large-diameter portion having an outer diameter larger than the valve mounting hole in a state where the press-fit member is attached to the valve mounting hole, and including a rim-facing surface facing the outer surface of the rim,
the cover sleeve is provided with a large-diameter receiving portion configured to receive the outer large-diameter portion and at least partially forming a reduced diameter portion facing the rim-facing surface, and
opposing portions of the rim-facing surface and the reduced diameter portion serve as the second retaining engagement portions.

4. The tire valve according to claim 3, wherein the outer large-diameter portion includes a tapered guide portion reduced in diameter with increasing distance from the rim on a side opposite to the rim-facing surface.

5. The tire valve according to claim 3 or 4, wherein the reduced diameter portion has a tapered shape that narrows toward the rim.

6. The tire valve according to claim 5, wherein an end portion of the reduced diameter portion is in abutment with the outer surface of the rim.

7. The tire valve according to any one of claims 3 to 5, comprising an extended cylindrical portion extended from the reduced diameter portion to be in abutment with the outer surface of the rim.

8. The tire valve according to any one of claims 1 to 7, wherein
the first retaining engagement portion of the cover sleeve is a female threaded portion formed on an inner surface of the cover sleeve, and
the first retaining engagement portion of the valve stem is a male threaded portion to be threadedly engaged with the female threaded portion.

9. The tire valve according to claim 8, comprising
a cap configured to close a distal end portion of the valve stem and including a female threaded portion on an inner surface, wherein
the male threaded portion of the valve stem is configured to be threadedly engageable with the female threaded portion of the cover sleeve and the female threaded portion of the cap.

10. The tire valve according to claim 8, wherein the cover sleeve is closed at one end to close a distal end portion of the valve stem.

11. The tire valve according to any one of claims 8 to 10, wherein the cover sleeve includes a tool engagement portion having a hexagonal shape as viewed in an axial direction.

12. The tire valve according to any one of claims 1 to 11, comprising:
a proximal end-side exposed portion provided in the valve stem and protruding from a proximal end surface of the press-fit member; and
a state monitoring device attached to the proximal end-side exposed portion to monitor a state in a tire.

13. A cover sleeve used for the tire valve according to any one of claims 1 to 12.
